(19) Europäisches Patentamt
European Patent Office
Office européen des brevets

(11) EP 0 786 488 A2

(12) **EUROPEAN PATENT APPLICATION**

(43) Date of publication:
**30.07.1997 Bulletin 1997/31**

(51) Int. Cl.[6]: **C08G 77/12**

(21) Application number: **97100378.5**

(22) Date of filing: **10.01.1997**

(84) Designated Contracting States:
**DE FR GB**

(30) Priority: **29.01.1996 JP 13201/96**

(71) Applicant: **KAO CORPORATION**
**Chuo-ku, Tokyo (JP)**

(72) Inventors:
- **Nakamura, Genichi,**
**c/o Kao Corporation**
**Wakayama-shi, Wakayama (JP)**
- **Nishimori, Tadashi,**
**c/o Kao Corporation**
**Wakayama-shi, Wakayama (JP)**

(74) Representative: **Kindler, Matthias, Dr. Dipl.-Chem. et al**
**Hoffmann, Eitle & Partner,**
**Patent- und Rechtsanwälte,**
**Arabellastrasse 4**
**81925 München (DE)**

# (54) Block hydrogen-modified silicone and process for producing the same

(57) A block hydrogen-modified silicone capable of fully exhibiting the characteristics of both of silicone and its modifying group and a process for producing the same.

A block hydrogen-modified silicone which is a copolymer having a main chain consisting exclusively of a siloxane chain containing a dialkylsiloxane chain (I) and an alkylhydrogensiloxane chain (II), wherein the number-average chain length ($m_a$) of the dialkylsiloxane unit and the number-average chain length ($n_a$) of the alkylhydrogensiloxane unit are each from 5 to 3,000.

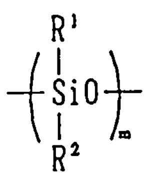 (I)

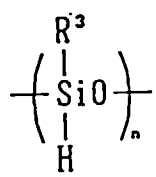 (II)

wherein $R^1$, $R^2$ and $R^3$ represent each an alkyl group having 1 to 6 carbon atoms or a phenyl group; and m and n represent each an integer of 1 or more.

EP 0 786 488 A2

## Description

### FIELD OF THE INVENTION

This invention relates to a block hydrogen-modified silicone and a process for producing the same. More particularly, it relates to a block hydrogen-modified silicone wherein the modification sites of silicone have been arranged in the form of block and a process for producing the same.

### BACKGROUND OF THE INVENTION

Silicone, which is excellent in water repellency, lubricating properties, electrical insulating properties, heat resistance, moisture permeability, etc. and has a number of additional characteristics, has been widely applied to mold releasing agents, lubricants, cosmetic materials, etc. However, silicone suffers from some disadvantages such as being hardly blended and failing to form any film. Therefore, it has been a practice to make up for these disadvantages by modifying silicone.

As a method for modifying silicone, it has been frequently performed, for example, to introduce hydrosilyl group into silicone having SiH units. In the conventional SiH-containing silicones, however, the modification sites are located at random. When such an SiH-containing silicone is further modified, therefore, the characteristics of the silicone are worsened in some cases.

Accordingly, there has been required a modified silicone capable of fully exhibiting the characteristics of both of silicone and the modifying group.

### SUMMARY OF THE INVENTION

Namely, an object of the present invention is to provide a modified silicone capable of exhibiting the characteristics of both of silicone and the modifying group and a process for producing the same.

Under these circumstances, the present inventors have considered that the characteristics of both of silicone and the modifying group can be fully exhibited by arranging the modification sites in the form of block. Thus they have conducted extensive studies and consequently completed the present invention.

Accordingly, the present invention relates to a block hydrogen-modified silicone which is a copolymer having a main chain consisting exclusively of a siloxane chain containing a dialkylsiloxane chain represented by formula (I):

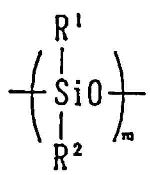

(I)

wherein $R^1$ and $R^2$ may be the same or different and each represents an alkyl group having 1 to 6 carbon atoms or a phenyl group; and m is an integer of 1 or more, provided that m $R^1$s and m $R^2$s may be the same or different;
and an alkylhydrogensiloxane chain represented by formula (II):

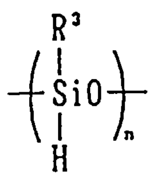

(II)

wherein $R^3$ represents an alkyl group having 1 to 6 carbon atoms or a phenyl group; and n is an integer of 1 or more, provided that n $R^3$s may be the same or different;
wherein the number-average chain length ($m_a$) of the dialkylsiloxane unit and the number-average chain length ($n_a$) of the alkylhydrogensiloxane unit are each from 5 to 3,000.

The present invention further relates to a process for producing the above-mentioned block hydrogen-modified silicone which comprises separately synthesizing a dialkylsiloxane prepolymer represented by formula (III):

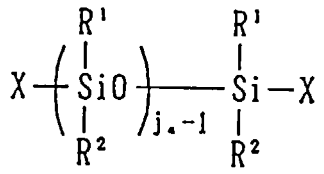

(III)

wherein $R^1$ and $R^2$ have the same meaning as defined above and $R^1$s and $R^2$s may be the same or different; X represents a halogen atom, a hydroxyl group, an alkoxy group, an organic acid acyloxy group or a sulfoxy group; and $j_a$ is a number of from 5 to 3,000 representing the number-average chain length of the dialkylsiloxane unit;
and an alkylhydrogensiloxane prepolymer represented by formula (IV):

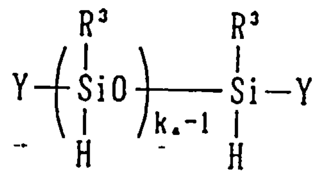

(IV)

wherein $R^3$ has the meaning as defined above and $R^3$s may be the same or different; Y represents a halogen atom, a hydroxyl group, an alkoxy group, an organic acid acyloxy group or a sulfoxy group; and $k_a$ is a number of from 5 to 3,000 representing the number-average chain length of the alkylhydrogensiloxane unit;
followed by the polycondensation of these prepolymers with each other.

BRIEF DESCRIPTION OF THE DRAWINGS

Fig. 1 is the $^{29}$Si-NMR spectrum of the product obtained in Example 1.
Fig. 2 is the $^{29}$Si-NMR spectrum of the product obtained in Comparative Example 1.
Fig. 3 is the $^{29}$Si-NMR spectrum of the product obtained in Example 2.

DETAILED DESCRIPTION OF THE INVENTION

Now, the mode of the embodiment of the present invention will be described in greater detail.

The block hydrogen-modified silicone of the present invention consists of the dialkylsiloxane chain represented by the above formula (I) and the alkylhydrogensiloxane chain represented by the above formula (II) connected to each other in the form of block.

In usual, some siloxane copolymers are represented by formula (V) or (VI):

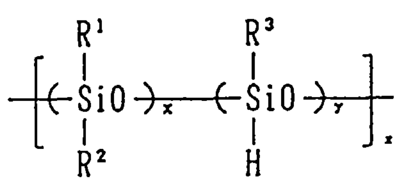

(V)

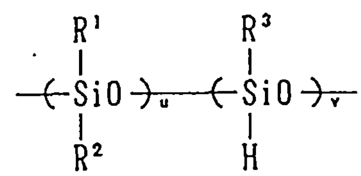

(VI)

wherein $R^1$, $R^2$ and $R^3$ have each the same meaning as defined above; and x, y, z, u and v represent each a positive number. These siloxane copolymers might seem block copolymers (i.e., blocked copolymers) at first glance. However, it is a common knowledge in the art that these formulae (V) and (VI) do not indicate the distribution manner of the chains but merely mean that such materials are copolymers consisting of these components wherein x, y, u, v, etc. stand for

the copolymerization ratios or the total numbers. The chain distribution is usually a random one, though it depends on the method for the production of the copolymer.

In contrast, the block hydrogen-modified silicone of the present invention has the number-average chain lengths $m_a$ and $n_a$ both being at least 5 and thus differs in this point from the conventional random copolymers represented by the above formula (V) or (VI).

In the present invention , the values of $m_a$ and $n_a$ can be determined by, for example, $^{29}$Si-NMR. When $R^1$, $R^2$ and $R^3$ are all methyl groups, for example, the chemical shifts (standard: trimethylsilyl) corresponding to the 3 chains expressed in the copolymer of dimethylsiloxane (D) with methylhydrogensiloxane (H) are as follows. However, these peaks seems to split so as to correspond to 5 or 7 chains depending on the resolution of the NMR employed.

| | |
|---|---|
| -D-$\underline{D}$-D-: | around - 21.6 ppm. |
| -D-$\underline{D}$-H-: | around - 20.2 ppm. |
| -H-$\underline{D}$-H-: | around - 18.8 ppm. |
| -H-$\underline{H}$-H-: | around - 35.0 ppm. |
| -H-$\underline{H}$-D-: | around - 36.1 ppm. |
| -D-$\underline{H}$-D-: | around - 37.2 ppm. |

The number-average chain length of each block in the copolymer is calculated in accordance with the following formulae.

$$m_a = \frac{A_{DDD} + A_{DDH} + A_{HDH}}{1/2\,A_{DDH} + A_{HDH}}.$$

$$n_a = \frac{A_{HHH} + A_{HHD} + A_{DHD}}{1/2\,A_{HHD} + A_{DHD}}.$$

In the above formulae, $A_{DDD}$ represents the area of the DDD chains; $A_{DDH}$ represents the area of the DDH chains; $A_{HDH}$ represents the area of the HDH chains; $A_{HHH}$ represents the area of the HHH chains; $A_{HHD}$ represents the area of the HHD chains; and $A_{DHD}$ represents the area of the DHD chains.

The block hydrogen-modified silicone of the present invention shows substantially neither HDH nor DHD peak.

When the copolymerization ratio of one component is elevated in a general random copolymer, it is a matter of course that the number-average chain length of this component is prolonged and sometimes exceeds 5. In this case, the number-average chain length of another component is shortened. Namely, there has been known no such the block copolymer as the one of the present invention wherein the number-average chain lengths of both components are 5 or more. This fact suggests that the block hydrogen-modified silicone of the present invention is an extremely novel one.

In the block hydrogen-modified silicone of the present invention, the number-average chain lengths $m_a$ and $n_a$ may range from 5 to 3,000, preferably from 5 to 1,000 and more preferably from 10 to 500. With an increase in these number-average chain lengths, the silicone moiety and the modification moiety are segmented to a higher extent, thus exhibiting properties largely different from the corresponding random copolymer. It is not preferable in practice that the number-average chain lengths $m_a$ and $n_a$ exceed 3,000, since undesirable phenomena (an increase in viscosity, a decrease in solubility, enlarged intermolecular composition distribution, etc.) occur in such a case.

The block hydrogen-modified silicone of the present invention is one of the multiblock type. In a special case, however, it may be in the form of a diblock body (for example, $D_m$-$H_n$) or a triblock body (for example, $D_m$-$H_n$-$D_m$, $H_n$-$D_m$-$H_n$) wherein the dialkylsiloxane unit (D) and the alkylhydrogensiloxane unit (H) are bonded to each other. The number of the repeated multiblocks is not particularly restricted.

In the block hydrogen-modified silicone of the present invention , $R^1$, $R^2$ and $R^3$ in the formulae (I) and (II) represent each an alkyl group having 1 to 6 carbon atoms (for example, methyl, ethyl, propyl, butyl, pentyl, hexyl) or a phenyl group. When the availability of the starting materials and the characteristics of silicone are taken into consideration, methyl and phenyl groups are preferable therefor and methyl groups are still preferable.

The degree of SiH-modification (i.e., the ratio of the alkylhydrogensiloxane units to the total siloxane units) of the block hydrogen-modified silicone of the present invention may be an arbitrary value falling within the range of generally from 1 to 99%, preferably from 1 to 50% and more preferably from 5 to 50%. Although the degree of SiH-modification may exceed 50%, it is sometimes observed in this case that the characteristics of silicone are lost or an economical disadvantage arises. When the degree of SiH-modification is less than 1%, on the other hand, the characteristics of the modifying group are lost or the block hydrogen-modified silicone scarcely differs from the corresponding random copolymer.

It is preferable that the molecular weight of the block hydrogen-modified silicone of the present invention is from

1,000 to 1,000,000, though the present invention is not restricted thereto. The block hydrogen-modified silicone of the present invention may further contain well-known siloxane unit(s), for example, those represented by the following formulae:

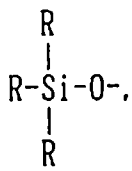 , 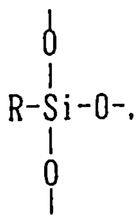 , 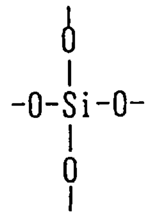

wherein R represents an alkyl group having 1 to 6 carbon atoms or a phenyl group; without departing from the scope of the present invention.

Next, a process for producing the block hydrogen-modified silicone of the present invention will be illustrated.

The block hydrogen-modified silicone of the present invention can be obtained by separately synthesizing a dialkylsiloxane prepolymer represented by formula (III):

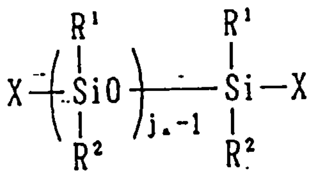

(III)

wherein $R^1$ and $R^2$ have the same meaning as defined above and $R^1$s and $R^2$s may be the same or different; X represents a halogen atom, a hydroxyl group, an alkoxy group, an organic acid acyloxy group or a sulfoxy group; and $j_a$ is a number of from 5 to 3,000 representing the number-average chain length of the dialkylsiloxane unit;
and an alkylhydrogensiloxane prepolymer represented by formula (IV):

(IV)

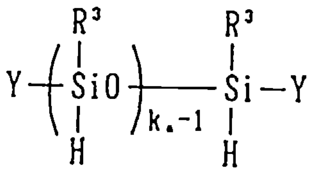

wherein $R^3$ has the same meaning as defined above and $R^3$s may be the same or different; Y represents a halogen atom, a hydroxyl group, an alkoxy group, an organic acid acyloxy group or a sulfoxy group; and $k_a$ is a number of from 5 to 3,000 representing the number-average chain length of the alkylhydrogensiloxane unit;
followed by the polycondensation of these prepolymers with each other.

The terminal functional group X and Y in the above-mentioned prepolymers each has the same meaning as defined above. Particular examples thereof include -Cl, -Br, -I, -OH, $CH_3O$-, $C_2H_5O$-, $CH_3COO$-, $ClCH_2COO$-, $Cl_2CHCOO$-, $CCl_3COO$-, $CF_3COO$-, $CH_3SO_3$- and $CF_3SO_3$-. These functional groups are condensed with each other either directly or via hydrolysis to thereby form the block hydrogen-modified silicone of the present invention.

As a process for producing a block copolymer similar to the above-mentioned one, there has been known a process which comprises synthesizing prepolymers having a carboxyl group, an amino group, a hydroxyl group, etc. at the end and binding these prepolymers to each other with the use of an appropriate condensing agent.

In this process, however, the functional groups should be reacted at low concentrations so as not to deteriorate the highly reactive SiH group, which makes it generally difficult to achieve a high reaction rate. Further, the polar functional group existing in the binding part sometimes worsens the inherent characteristics of silicone.

By the above-mentioned process with the use of the prepolymers represented by formulae (III) and (IV), the reaction rate can be easily elevated. Since the main chain consists exclusively of the siloxane chain, further, the desired modification can be completed without deteriorating the characteristics of silicone.

The above-mentioned prepolymers represented by formulae (III) and (IV) can be synthesized by, for example, the hydrolysis/condensation of dichlorosilane, dialkoxysilane, etc. or the equilibrium polymerization of a cyclic oligomer.

By the hydrolysis/condensation method, it is possible to obtain a prepolymer having the functional group of the silane employed as the starting material (e.g., chloro, alkoxy, silanol, etc.) at the end. The reaction may be performed under well-known conditions. When an appropriate degree of polymerization of the condensate is achieved, the catalyst may be removed or the contact with water may be ceased. Since various cyclic products may be formed in this hydrolysis/ condensation method, the reaction conditions should be selected carefully.

In the equilibrium polymerization method, an acid catalyst is employed. Generally speaking, the prepolymer in which the acid employed is bonded to the end in the form of its silyl ester is obtained. Alternatively, the reaction may be carried out by using a solid acid catalyst (for example, active clay) and adding a definite amount of diacyloxydialkylsilane, dialkoxydialkylsilane, etc. as the terminal group. It is also possible to obtain a prepolymer represented by the above formula (III) or (IV) through equilibrium polymerization by adding a solid acid catalyst with an alcohol or an acid. In the equilibrium polymerization method, cyclic product(s) are always formed at a ratio of 10 to 20% to the total system. To achieve the desired degree of polymerization, it is therefore necessary to correct the ratio of the functional group to the siloxane unit.

The number-average chain lengths of the prepolymers represented by formulae (III) and (IV) are from 5 to 3,000. The chain distribution of the block hydrogen-modified silicone of the present invention (i.e., the final product) is determined based on these chain lengths. However, they do not always agree with each other, since condensation between the same units might occur in some cases.

The prepolymer of formula (III) and the prepolymer of formula (IV) thus obtained are mixed and polycondensed to thereby give the target product, i.e., the block hydrogen-modified silicone of the present invention. The conditions for the polycondensation largely vary depending on the molecular weights and functional groups of the prepolymers. When the prepolymers have large molecular weights, it is necessary to use a solvent because of the incompatibility of the prepolymers with each other. As the solvent, it is appropriate to use aliphatic or alicyclic hydrocarbons (hexane, heptane, cyclohexane, etc.), aromatic hydrocarbons (benzene, toluene, xylene, etc.) and halogenated solvents (chloroform, methylene chloride, trichloroethylene, chlorobenzene, etc.).

To regulate the number of the repetition of the block hydrogen-modified silicone of the present invention, trialkylsilanol, trialkylchlorosilane, etc., may be added thereto. Such the substance may be added either simultaneously with the mixing of the prepolymers or after the polycondensation has proceeded to a certain extent.

Although an appropriate acid catalyst may be used in the polycondensation, the use of a strong acid sometimes causes re-equilibrium and thus shortens the chain length. When an acid is formed as the eliminating group at the condensation, it is particularly necessary to select mild conditions.

It is particularly preferable in the present invention to polycondensate a prepolymer of formula (III) wherein X is a dichloroacetoxy group with a prepolymer of formula (IV) wherein Y is a methoxy group; to polycondensate a prepolymer of formula (III) wherein X is a trifluoroacetoxy group with a prepolymer of formula (IV) wherein Y is a trifluoroacetoxy group; or to polycondensate a prepolymer of formula (III) wherein X is a hydroxyl group with a prepolymer of formula (IV) wherein Y is a trifluoroacetoxy group.

The block hydrogen-modified silicone of the present invention thus obtained may be purified by washing with water, desolvation, etc. The cyclic compounds formed as the by-products can be eliminated by stripping under reduced pressure or washing with a polar solvent such as ethanol.

The block hydrogen-modified silicone of the present invention may be derived into a desired modified silicone by, for example, hydrosilylation with an olefin. The modified silicone thus obtained is largely segmented into the silicone moiety and the modification moiety. Thus it strongly sustains the characteristics of both of the silicone and the modifying group, as compared with the conventional random-modified products. Further, it is capable of exhibiting surface activity, converting a solvent into a gel, forming a film, etc. owing to the high degree of segmentation.

Accordingly, the block hydrogen-modified silicone of the present invention is highly useful as, for example, an intermediate in the synthesis of materials usable in cosmetics, mold releasing agents, lubricants, etc.

## EXAMPLE

To further illustrate the present invention in greater detail, the following Examples will be given.

### Example 1

Into a four-necked flask (300 ml) were fed 45 g of 1,3,5,7-tetramethylcyclotetrasiloxane and 8.55 g of trifluoroacetic acid and subjected to equilibrium polymerization at 60°C for 6 hours. After confirming that the cyclic compound concentration was not changed any more by GLC analysis [apparatus: Shimadzu GC-4AG, packing agent: SE-30 (30%), column: 2.6 mm (diameter) × 2 m, temperature: 60°C → 250°C (8°C/min), inlet: 250°C, detector: FID], the reaction mixture was cooled to room temperature and a solution of 55 g of a marketed modified silicone having silanol at both ends (PS341 manufactured by Chisso Corporation) in 200 ml of methylene chloride was poured thereinto. After reacting as such at room temperature for 30 minutes, 1.8 g of trimethylsilanol was added thereto and the resulting mixture was

reacted for additional 30 minutes. Next, the reaction mixture was washed with water until the washing liquor became neutral and dried by adding $Na_2SO_4$ thereto. After distilling off the solvent and low molecular weight substances, 85 g of a transparent and viscous oil was obtained. GPC analysis (THF system, PS standard) indicated that this product showed a single-peak molecular weight distribution and had a weight-average molecular weight of 49,000.

Fig. 1 shows the $^{29}$Si-NMR spectrum [JEOL-270 MHz, 50% in $CDCl_3$, tube diameter: 10 mm] of the oil obtained above. The area ratio of the hetero-chain to the homo-chain indicated that the number-average chain lengths $m_a$ and $n_a$ of the D and H blocks were each around 100.

The obtained polysiloxane almost consisted of D-homo and H-homo chains and had an optically uniform appearance. Thus it was concluded that the hydrogen had been modified in blocks.

Comparative Example 1

55.5 g of octamethylcyclotetrasiloxane, 45 g of 1,3,5,7-tetramethylcyclotetrasiloxane, 0.49 g of hexamethyldisiloxane and 8.6 g of trifluoroacetic acid were mixed together and subjected to equilibrium polymerization at 60°C for 48 hours. After the completion of the reaction, the reaction mixture was post-treated in the same manner as described in Example 1 to thereby give 89 g of a transparent and viscous oil having a weight-average molecular weight of 99,000.

Fig. 2 shows the $^{29}$Si-NMR spectrum of the oil obtained above. The number-average chain lengths $m_a$ and $n_a$ were both 2, thus agreeing with the estimated values of the random (1 : 1) copolymer.

Comparative Example 2

Polydimethylsiloxane and polymethylhydrogensiloxane (weight-average molecular weight: 50,000), which had been synthesized separately, were mixed together at a ratio of 1 : 1. In this case, the liquid mixture became cloudy and these monomers could not be uniformly compatibilized with each other.

Example 2

The procedure of Example 1 was repeated except for using 27 g of 1,3,5,7-tetramethylcyclotetrasiloxane, 10.3 g of trifluoroacetic acid, 77.7 g of the marketed modified silicone having silanol at both ends (PS341 manufactured by Chisso Corporation) and 100 ml of methylene chloride to thereby give 79 g of a transparent and viscous oil. This product showed a single-peak molecular weight distribution and had a weight-average molecular weight of 82,000.

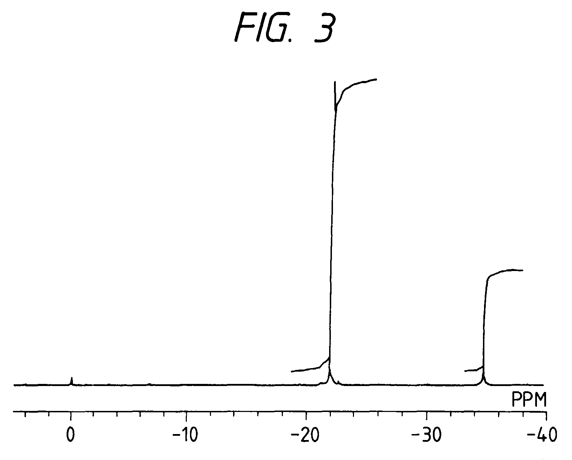

Fig. 3 shows the $^{29}$Si-NMR spectrum of the product obtained above. As is apparent from Fig. 3, this product is a block hydrogen-modified silicone consisting of the D block having a number-average chain length of at least 100 and the H block having a number-average chain length of at least 50.

Example 3

A prepolymer 1 was prepared by the equilibrium polymerization of 99.9 g of octamethylcyclotetrasiloxane and 38.5 g of trifluoroacetic acid at 60°C for 24 hours. Separately, a prepolymer 2 was prepared by the equilibrium polymerization of 9.0 g of 1,3,5,7-tetramethylcyclotetrasiloxane and 2.9 g of trifluoroacetic acid at 60°C for 12 hours.

The prepolymer 1 was diluted with 100 ml of methylene chloride at room temperature and poured into the prepolymer 2. After confirming that the reaction system had been homogenized, 50 ml of water was added thereto and the reaction was performed under vigorously stirring at room temperature for 30 minutes. Next, 4.5 g of trimethylsilanol was added to the reaction mixture and then the mixture was further stirred at room temperature for 30 minutes. After the completion of the reaction, the reaction mixture was treated in the same manner as described in Example 1 to thereby give 77 g of a transparent and viscous oil.

This product showed a single-peak molecular weight distribution and had a weight-average molecular weight of 22,000. NMR chain analysis indicated that it was a block hydrogen-modified silicone consisting of the D block having a number-average chain length of at least 100 and the H block having a number-average chain length of at least 20.

Example 4

The procedure of Example 1 was repeated except for using 27 g of 1,3,5,7-tetramethylcyclotetrasiloxane, 11.7 g of dichloroacetic acid in place of the trifluoroacetic acid (8.55 g) and 77.7 g of another marketed modified silicone having silanol at both ends (PS343) in place of the marketed modified silicone having silanol at both ends (55 g; PS341 manufactured by Chisso Corporation) to thereby give 82 g of a transparent and viscous oil.

This product showed a single-peak molecular weight distribution and had a weight-average molecular weight of 268,000. NMR chain analysis indicated that it was a block hydrogen-modified silicone consisting of the D block having a number-average chain length of at least 350 and the H block having a number-average chain length of at least 150.

Example 5

A prepolymer 1 was prepared by the equilibrium polymerization of 99.9 g of octamethylcyclotetrasiloxane and 38.5 g of trifluoroacetic acid at 60°C for 24 hours. Separately, a prepolymer 2 was prepared by equilibrating 50 g of 1,3,5,7-tetramethylcyclotetrasiloxane and 1.8 g of methyldimethoxysilane in the presence of 1% by weight of active clay at 50°C for 2 hours and then filtering.

9 g of the prepolymer 2 was diluted with 50 ml of methylene chloride at room temperature and poured into the prepolymer 1 and reacted at room temperature for 30 minutes under vigorously stirring. After adding 1.0 g of trimethylsilanol, the reaction mixture was further stirred at room temperature for 30 minutes. After the completion of the reaction, the reaction mixture was treated in the same manner as described in Example 1 to thereby give 74 g of a transparent and viscous oil.

This product showed a single-peak molecular weight distribution and had a weight-average molecular weight of 73,000. NMR chain analysis indicated that it was a block hydrogen-modified silicone consisting of the D block having a number-average chain length of at least 400 and the H block having a number-average chain length of at least 30.

Example 6

A prepolymer 1 was prepared by equilibrating 99.9 g of octamethylcyclotetrasiloxane and 1.7 g of dichloroacetic acid in the presence of 3% by weight of active clay at 60°C for 5 hours. Separately, a prepolymer 2 was prepared by equilibrating 50 g of 1,3,5,7-tetramethylcyclotetrasiloxane and 4.4 g of methyldimethoxysilane in the presence of 1% by weight of active clay at 50°C for 2 hours and then filtering.

9 g of the prepolymer 2 was diluted with 50 ml of n-hexane at room temperature and poured into the unfiltered prepolymer 1. In the presence of the active clay remaining in the reaction system, the mixture was reacted at room temperature for 30 minutes under vigorously stirring. After adding 1.0 g of trimethylsilanol, the reaction mixture was further stirred at room temperature for 30 minutes. After the completion of the reaction, the reaction mixture was filtered and treated in the same manner as described in Example 1 to thereby give 72 g of a transparent and viscous oil.

This product showed a single-peak molecular weight distribution and had a weight-average molecular weight of 55,000. NMR chain analysis indicated that it was a block hydrogen-modified silicone consisting of the D block having a number-average chain length of at least 400 and the H block having a number-average chain length of at least 20.

Example 7

A prepolymer 1 was prepared by equilibrating 9 g of 1,3,5,7-tetramethylcyclotetrasiloxane and 1.7 g of trifluoroacetic acid at 60°C for 6 hours. Separately, a prepolymer 2 was prepared by equilibrating 200 g of octamethylcyclotetrasiloxane and 3.3 g of dimethyldimethoxysilane in the presence of 3% by weight of active clay at 60°C for 6 hours and then filtering.

100 g of the prepolymer 2 was diluted with 100 ml of n-hexane at room temperature and poured into the prepolymer 1 and reacted at room temperature for 30 minutes under vigorously stirring. After adding 1.0 g of trimethylsilanol, the reaction mixture was further stirred at room temperature for 30 minutes. After the completion of the reaction, the reaction mixture was treated in the same manner as described in Example 1 to thereby give 77 g of a transparent and viscous oil.

This product showed a single-peak molecular weight distribution and had a weight-average molecular weight of 64,000. NMR analysis indicated that it was a block hydrogen-modified silicone consisting of the D block having a number-average chain length of at least 400 and the H block having a number-average chain length of at least 20.

While the invention has been described in detail and with reference to specific embodiments thereof, it will be apparent to one skilled in the art that various changes and modifications can be made therein without departing from the spirit and scope thereof.

**Claims**

1. A block hydrogen-modified silicone which is a copolymer having a main chain consisting exclusively of a siloxane chain containing a dialkylsiloxane chain represented by formula (I):

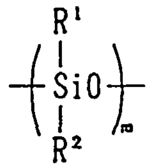

(I)

wherein $R^1$ and $R^2$ may be the same or different and each represents an alkyl group having 1 to 6 carbon atoms or a phenyl group; and m is an integer of 1 or more, provided that m $R^1$s and m $R^2$s may be the same or different; and an alkylhydrogensiloxane chain represented by formula (II):

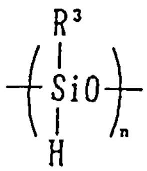

(II)

wherein $R^3$ represents an alkyl group having 1 to 6 carbon atoms or a phenyl group; and n is an integer of 1 or more, provided that n $R^3$s may be the same or different;
wherein the number-average chain length ($m_a$) of the dialkylsiloxane unit and the number-average chain length ($n_a$) of the alkylhydrogensiloxane unit are each from 5 to 3,000.

**2.** The block hydrogen-modified silicone as claimed in Claim 1, wherein $R^1$, $R^2$ and $R^3$ are all methyl groups.

**3.** The block hydrogen-modified silicone as claimed in Claim 1 or 2, wherein $m_a$ and $n_a$ are each from 5 to 1,000.

**4.** The block hydrogen-modified silicone as claimed in any one of the claims 1 to 3, wherein the degree of SiH-modification of said block hydrogen-modified silicone is from 1 to 50%.

**5.** A process for producing a block hydrogen-modified silicone which is a copolymer having a main chain consisting exclusively of a siloxane chain containing a dialkylsiloxane chain represented by formula (I):

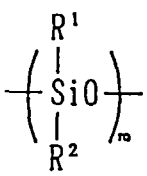

(I)

wherein $R^1$ and $R^2$ may be the same or different and each represents an alkyl group having 1 to 6 carbon atoms or a phenyl group; and m is an integer of 1 or more, provided that m $R^1$s and m $R^2$s may be the same or different; and an alkylhydrogensiloxane chain represented by formula (II):

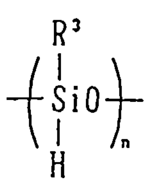

(II)

wherein $R^3$ represents an alkyl group having 1 to 6 carbon atoms or a phenyl group; and n is an integer of 1 or more, provided that n $R^3$s may be the same or different;
wherein the number-average chain length ($m_a$) of the dialkylsiloxane unit and the number-average chain length ($n_a$)

of the alkylhydrogensiloxane unit are each from 5 to 3,000, comprising separately synthesizing a dialkylsiloxane prepolymer represented by formula (III):

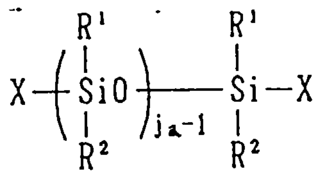

(III)

wherein $R^1$ and $R^2$ have the same meaning as defined above and $R^1$s and $R^2$s may be the same or different; X represents a halogen atom, a hydroxyl group, an alkoxy group, an organic acid acyloxy group or a sulfoxy group; and $j_a$ is a number of from 5 to 3,000 representing the number-average chain length of the dialkylsiloxane unit; and an alkylhydrogensiloxane prepolymer represented by formula (IV):

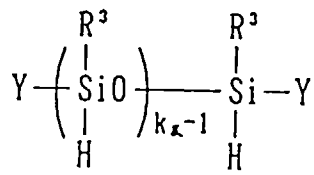

(IV)

wherein $R^3$ has the same meaning as defined above and $R^1$s may be the same or different; Y represents a halogen atom, a hydroxyl group, an alkoxy group, an organic acid acyloxy group or a sulfoxy group; and $k_a$ is a number of from 5 to 3,000 representing the number-average chain length of the alkylhydrogensiloxane unit; followed by the polycondensation of these prepolymers with each other.

**6.** The process as claimed in Claim 5, wherein X is a dichloroacetoxy group and Y is a methoxy group.

**7.** The process as claimed in Claim 5, wherein X and Y are both trifluoroacetoxy groups.

**8.** The process as claimed in Claim 5, wherein X is a hydroxyl group and Y is a trifluoroacetoxy group.

FIG. 1

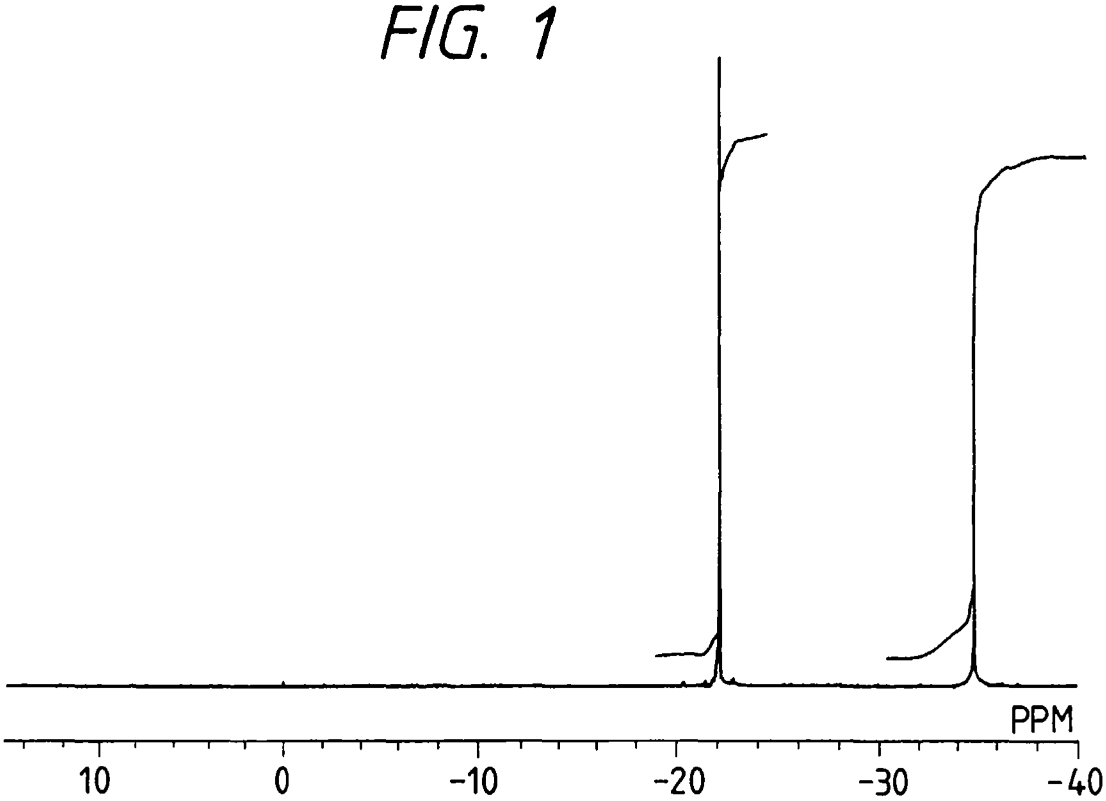


FIG. 2

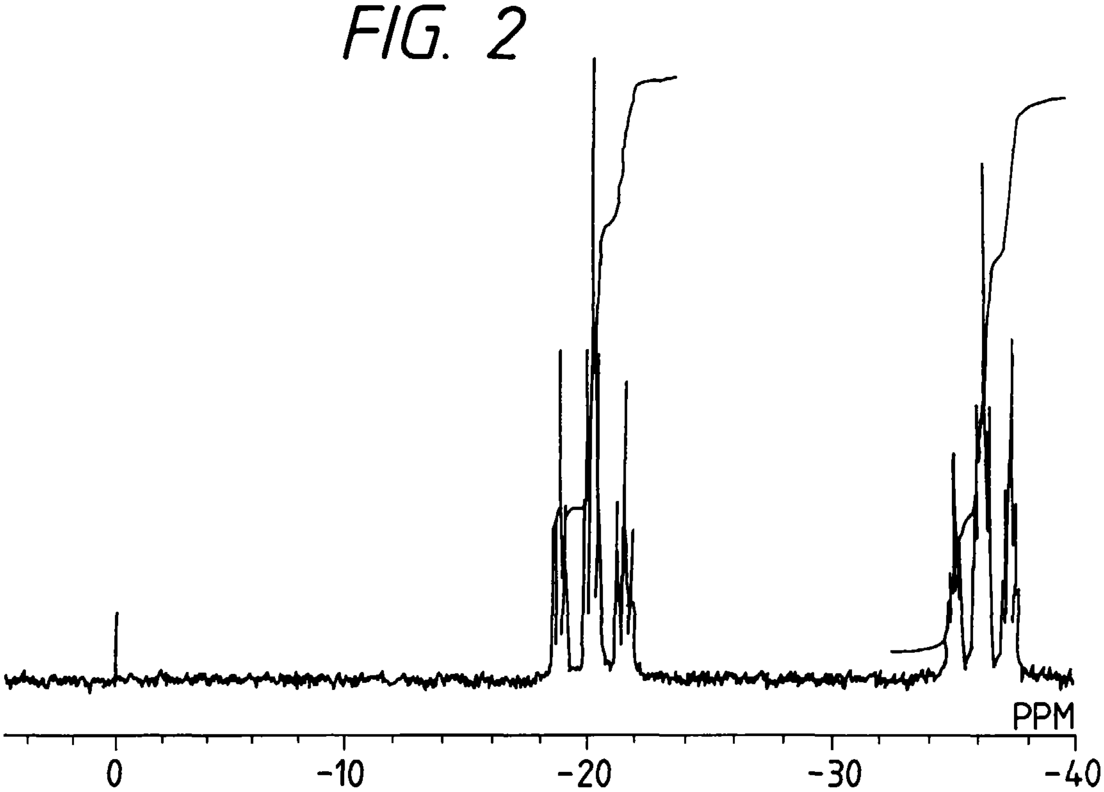

FIG. 3